# EUROPEAN PATENT APPLICATION

(11) **EP 4 835 834 A1**
(43) Date of publication of application: **04.11.2026**
(21) Application number: 26162274.0
(22) Date of filing: 04.03.2026
(51) Int. Cl.: G06V 10/30, G06V 10/82, G06T 5/77

(54) **ADVERSARIAL PATCH DETECTION**

(30) Priority: 30.04.2025 IL 32062725
(71) Applicant: FUJITSU LIMITED, Kawasaki-shi, Kanagawa 211-8588 (JP); B.G. Negev Technologies and Applications Ltd., 8410501 Beer Sheva (IL)
(72) Inventor: YANKELEV, Idan, 8410501 Beer Sheva (IL); GROLMAN, Edita, 8410501 Beer Sheva (IL); YERUSHALMI LEVI, Yarin, 8410501 Beer Sheva (IL); GILONI, Amit, Slough, SL1 2BE (GB); HOFMAN, Omer, Slough, SL1 2BE (GB); SHIMIZU, Toshiya, Slough, SL1 2BE (GB); ELOVICI, Yuval, 8410501 Beer Sheva (IL); SHABTAI, Asaf, 8410501 Beer Sheva (IL)
(74) Representative: Haseltine Lake Kempner LLP

(57) **Abstract**

A computer-implemented method for removing an adversarial patch from an image, comprising, receiving an input image, generating a noise image comprising random noise, inputting the input image and the noise image into a neural network;, extracting, using the neural network, a semantic content from the input image and a style from the noise image and constructing a de-styled image of the input image from the semantic content with the style from the noise image removed.

## Description

### Technical field

The present invention relates to methods for removing a patch from an image. In particular, the present invention relates to a computer implemented method for removing an adversarial patch from an image.

### Background

In the field of computer vision, the object detection (OD) task consists of the localization and classification of objects within an image or video scene. Object detection is used in real-time applications, such as autonomous driving and self-checkout retail systems. Object detection is a practical application within the field of image recognition, which already holds a significant market share. The global image recognition market is expected to grow from $46.7 billion in 2024 to $178.13 billion by 2032, at a compound annual growth rate (CAGR) of 17.1%. [https://www.marketsandmarkets.com/Market-Reports/imagerecognition-market-222404611.html, Accessed 14 March 2025] [https://www.fortunebusinessinsights.com/industry-reports/imagerecognition-market-101855, Accessed 14 March 2025].

Object detection (or OD) models (similarly to other deep neural network models) are vulnerable to adversarial attacks, particularly adversarial patch attacks. These attacks pose a significant threat to the reliability of an OD model by inserting a maliciously crafted patch into an image, causing the model to make incorrect predictions and classifications.

While several defenses have been proposed over the years, their enhanced adversarial robustness often comes with a cost of reduced performance on benign images (images without adversarial patches) and an increased image processing time. Since only a small portion of OD scenarios face adversarial threats, it may be crucial to maintain high performance on both benign and adversarial images. Furthermore, to be effective, a real-time OD system may be required to process images at, at least, 10 FPS.

It is therefore desirable to improve defense methods against adversarial patch attacks.

### Summary of the invention

The present invention is defined in the independent claims, to which reference should now be made. Advantageous features are set out in the sub claims.

According to an aspect, there is provided a computer-implemented method for removing an adversarial patch from an image, comprising, receiving an input image, generating a noise image comprising random noise, inputting the input image and the noise image into a neural network, extracting, using the neural network, a semantic content from the input image and a style from the noise image and constructing a de-styled image of the input image from the semantic content with the style from the noise image removed.

According to another aspect, there is provided a computer program which, when run on a computer, causes the computer to carry out a method for removing an adversarial patch in an image, comprising, receiving an input image; generating a noise image comprising random noise, inputting the input image and noise image into a neural network, extracting, using the neural network, a semantic content from the input image and a style from the noise image and constructing a de-styled image of the input image from the semantic content with the style from the noise image removed.

According to yet another aspect, there is provided an information processing apparatus for removing an adversarial patch in an image, comprising a memory and a processor connected to the memory, wherein the processor is configured to receive an input image, generate a noise image comprising random noise, input the input image and noise image into a neural network, extract, using the neural network, a semantic content from the input image and a style from the noise image, and construct a de-styled image of the input image from the semantic content with the style from the noise image removed.

### Brief description of drawings

Reference is made, by way of example only, to the accompanying drawings in which:
**Figure 1** shows types of adversarial patch attacks;
**Figure 2** shows steps of a method for removing adversarial patches from images;
**Figure 3** shows a model architecture for removing adversarial patches from images;
**Figure 4** shows a flow chart of an exemplary method for removing adversarial patches from images;
**Figures 5a** shows a style removal phase which may be used with the methods described herein;
**Figure 5b** shows example images which may be used with the style removal phase;
**Figure 5c** shows a style removal architecture;
**Figure 6** shows a filtering phase;
**Figure 7** shows an enhancement phase;
**Figure 8** shows a mask phase;
**Figure 9** shows an example of an adversarial patch creation process;
**Figure 10** shows results of masking a benign and adversarial image using the methods described herein;
**Figure 11** shows a comparison of mean average precision (mAP%) for physical patch attacks on a Superstore dataset;
**Figure 12** shows attack success rate (ASR%) for the methods described herein compared with known defences;
**Figures 13a-13c** show examples of benign performance improvement using the methods described herein;
**Figure 14** shows is a block diagram of an information processing apparatus or a computing device or server for implementing the methods described herein.

### Detailed description

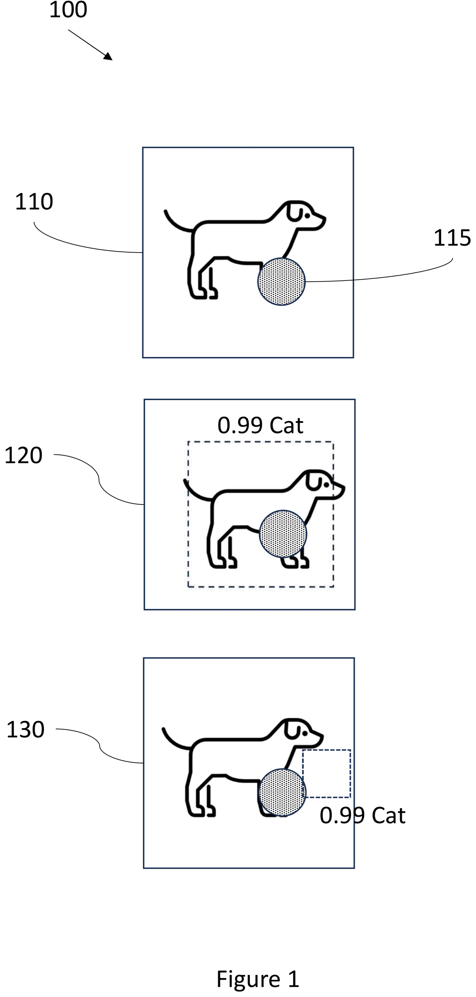

**Figure 1** shows types of adversarial patch attacks 100 which may be used with object detection models. As shown in each example, an image of a dog with an adversarial patch 115, may be input into the object detection model.

The adversarial patch may be placed digitally/physically on top of the object in a scene, causing the OD model to either: miss an object (disappearance attack 110), the dog has not be detected; mis-classify an object (illusion attack 120), the dog has been classified as a cat with 0.99 certainty; detect a phantom object (creation attack 130), the dog is not detected and a cat is detected in another part of the image.

These attacks may also occur on systems implemented in the 'real-world'. For instance, in the retail domain, an adversary could use patch attacks to confuse self-checkout system into believing an expensive item is a cheaper item. In this instance, due to the domain threat model, the attack would be physical and may be accomplished by adding, such as sticking, an adversarial patch to an expensive item, to be identified as a cheap one. Such attacks may evidently affect an OD model's performance and reliability.

An adversarial defence may be applied to a model at two possible stages in its lifecycle: 1) during its training process (in-training defences), or 2) as an additional component in the inference process (post-training defences).
1. In-Training Defences: These defences are incorporated during the training phase of the model, typically resulting in an inherently robust model. These defences may require full access (white-box) to the model. In-training defences typically focus on changing a model's structure or training process to produce a more robust model. Approaches for these defences include: adversarial training-based defenses which expose the model to intentionally crafted adversarial examples during training, the aim of which is to improve the model's ability to handle unexpected inputs, enhancing its generalization and robustness; and customized training-based defenses which typically involve adding a customized loss/model component that improves the model's ability to handle adversarial examples.

Furthermore, training-based methods may include attack-focused defenses which improve the model's robustness to the attacks while disregarding the performance on clean (benign) samples and clean-focus defenses which improve the model's robustness to the attacks while maintaining a reasonable performance on clean samples.

The inventors found that in-training defenses often suffer from limitations, such as having to adjust the defense solution for different OD architectures. Since different architectures have different training processes, the defense needs to be tailored for each OD model architecture which is a complex adjustment. A further limitation is the reliance on previously generated adversarial images for training. Relying on previously generated adversarial samples limits the defenses' generalization capabilities and might also cause overfitting to specific attacks, decreasing the robustness to new (future) attacks.

Post-training defenses typically focus on integrating an external component as part of the inference pipeline to make the model more robust during inference without the need for retraining. These defenses may be applied on the input sample itself (before the model querying) or on the model's predictions (after the query). Approaches for these defenses include segmentation-based defenses, which assume that an adversarial patch can be considered a distinct image segment. The defense uses a finetuned segmentation model to detect the attack's existence, pinpoint its location in the scene, and mask it. Therefore, a segmentation model can be trained to distinguish and mask these attacks. Adversarial pattern-based defenses process either the image's properties or the model's activations during inference time to detect and mask patterns associated with adversarial attacks.

While these defenses may be more easily adjusted to new OD architectures and sometimes do not require prior attack knowledge, they often suffer from limitations such as degraded performance on benign (clean, no adversarial patch) images, for instance when a false-positive detection occurs, it causes unnecessary masking and hides objects in the scene, resulting in a degradation in clean images' performance. Further these models increase image processing time, which may make them impractical for real-time OD applications which require fast detections.

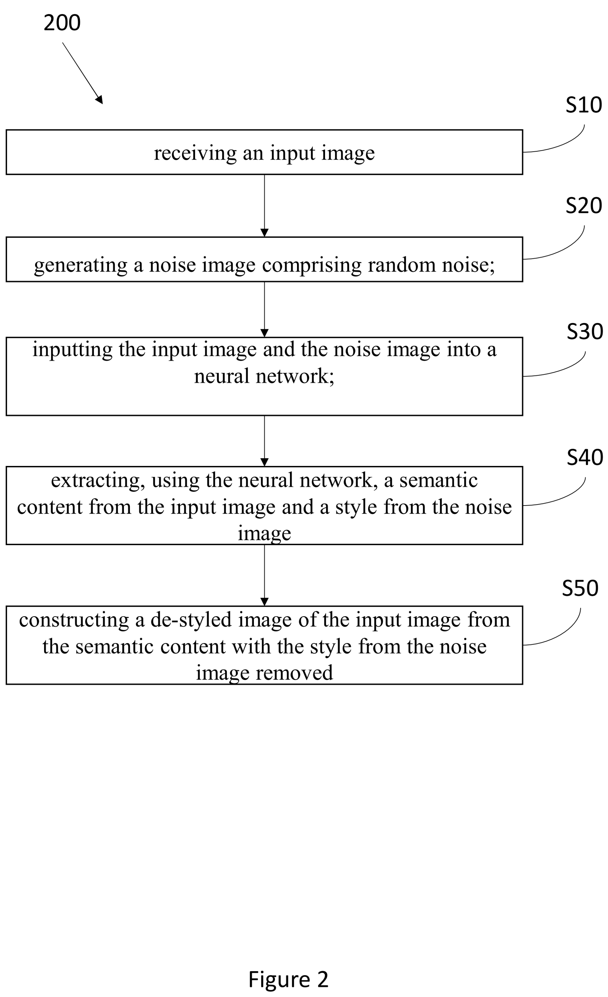

**Figure 2** shows steps of a method 200 for removing adversarial patches from images. In an aspect, the method is a computer-implemented method for removing adversarial patches from an image and comprises the following steps:
In a receiving step s10, an input image is received. The input image may be any image, for example, the input image may a photograph or painting or computergenerated image.

In a generating step s20, a noise image is be generated, the noise image comprising random noise. For instance, the noise image may be generated from a random seed.

In an inputting step s30, the input image and the noise image are input into a neural network (NN). The input image and the noise image may be input separately into the NN. That is, the NN may process the images separately.

The neural network model may be a (pretrained) convolutional neural network model. The neural network may be trained on the same type of image as the input image. For instance, if the input image is a photograph, the CNN may be trained at least on images of photographs.

In an extracting step s40, using the neural network, a semantic content from the input image and a style from the noise image is extracted. The semantic content may represent shapes, lines and edges in the image. The semantic content may therefore refer to subject matter, objects, people, setting, edges, lines and/or overall composition of an image. That is, the semantic content may refer to what is depicted in the image. The style of an image may refer to the artistic techniques, textures, colours, brushstrokes, lighting, and/or overall aesthetic choices of an image. That is, how the image is depicted.

The content and/or style may be extracted from intermediate layers of the CNN. For instance, the CNN may comprise at least convolutional layers and the intermediate layers may comprise the convolutional layers. Of course, the CNN may comprise other layers such as an input layer, pooling layer, fully connected layer, and output layer (which may use for example an activation function such as a SoftMax activation).

The semantic content of the input image may be extracted from a single layer of the CNN. The single layer may be a higher convolutional layer (e.g., a layer closer to the fully connected layer). For instance, the single layer may be the third or fourth or fifth or sixth layer of the CNN. The CNN may comprise blocks and each block may comprise convolutional layers. In an example the CNN may be a VGG-19 network [Karen Simonyan and Andrew Zisserman. Very deep convolutional networks for large-scale image recognition. ArXiv preprint arXiv:1409.1556, 2014*.].* The semantic content may be extracted from the conv4_2 (that is block 4 layer 2).

The style of the noise image may be extracted from multiple layers of the CNN model. The style of the noise image may be extracted from the lower convolutional layers (e.g., layers closer to the input layer). The style may be extracted from, for instance a combination of any of at least the first, second, third, fourth, and fifth layer of the CNN. For instance, with VGG-19 the style may be extracted from layers (conv1_1, conv2_1, conv3_1, conv4_1 and/or conv5_1).

In a constructing step s50, a de-styled image of the input image is constructed from the semantic content with the style from the noise image removed. The de-styled image may otherwise be referred to as an anti-styled image. The de-styled image may provide a representation of the input image with the style of the noise image removed. The style of the noise image may refer to spatially invariant features, textures, patterns and colour distributions and/or artistic effects. A style may refer to an effect which is not tied to the content of the image.

The de-styled image may be input into an object detection model to detect an object (and/or other content) in the image. The object detection model may be a convolutional neural network. The same CNN used to extract the content and style may be used or a different CNN may be used. The CNN may be a pretrained CNN configured for object detection. The pretrained CNN may comprise an input layer, convolution layer, pooling layer, fully connected layer, and/or output layer (which may use for example an activation function such as a SoftMax activation). An output from the CNN may be provided which indicates the content/objects in the de-styled image. For instance, the output may include a bounding box around the detected content/object with a content/object label.

The de-styled image may be constructed by iteratively updating the input image by a gradient descent optimization using a total loss function. For instance, the input image may be provided as an initial iteration image with a target of optimizing the initial iteration image based on the total loss function. The input image may therefore be updated at each iteration of the optimization. The total loss function may comprise a difference between a content loss function of the content and a style loss function of the style. The difference may be a weighted difference. For instance, the style loss function may be multiplied by a weight and may be subtracted from the content loss function which itself may be multiplied by another weight. Both weights may be positive weights.

As described above, the content may be extracted from a single layer of a neural network. The content loss function may be determined as the mean squared error between a content feature matrix of feature maps of the single layer and a corresponding feature matrix of the updated input image at an iteration of the iterations. For instance, the single layer may comprise at least one filter and each filter may be associated with a feature map. A content feature matrix may comprise each feature map, along with the size of each feature map. The corresponding feature matrix of the updated input image may be the feature matrix taken from the same single layer of the neural network.

The style loss function may be determined from the mean squared error between Gram matrices for each of the multiple layers and corresponding Gram matrices of the updated input image at an iteration. The Gram matrices for each layer of the multiple layers may be determined from the sum of inner products of each feature map in the layer.

For instance, each layer may comprise multiple filters and each filter may comprise a feature map. The Gram matrix for a layer may be determined by calculating the inner product of each combination of feature maps in that layer and then taking the sum of the inner products. A corresponding step may be applied for the Gram matrices of the updated input image at an iteration. For instance, the corresponding gram matrices may be taken from the same multiple layers of the neural network.

The method may further comprise padding the input image with the random noise image before inputting the input image into the neural network model. The padding may form a (complete or incomplete) border of random noise around the input image. For example, the border may be a complete border of a constant width, or an incomplete border, for example only on two opposing edges of the image. The padding may be between 5 pixels (px) and 20px. The padding may preferably be 10 pixels wide. The inventors used a fixed padding size of 10 pixels on each side of the input image. However, this may be adjusted according to the image size. For instance, the padding may occupy between 1% and 5% of the total padded image (input image and padding) size. Each following step in the method may be performed on the padded input image. That is, the semantic content may be extracted from the padded image and the de-styled image may be constructed from the semantic content of the padded image. The padding may be removed during/as part of the construction of the de-styled image.

The input image may comprise an adversarial patch and constructing the de-styled image may comprise removing the style of the random noise image from the padding and from the adversarial patch. The random noise padding may guarantee that a style of the random noise image is removed from the input image. The adversarial patch may also comprise random noise, for example the adversarial patch may be generated from an initial random noise seed. The random noise style of the adversarial patch may therefore also be removed.

The method may further comprise generating an image mask from corresponding pixels of the de-styled image and the input image which exceed a difference threshold and applying the image mask to the input image to generate a final image. The difference may be an absolute difference between corresponding pixels. The threshold may be between 99.9% and 90%, preferably the threshold is 99%. The threshold may be a dynamic threshold.

The image mask may be applied to the input image by subtracting the image mask from the input image.

The final image may be input into an object detection model (for instance the object detection model described above) for detecting an object in the image. In an instance where the input image includes an adversarial patch, the method may mask the patch, thereby leading to an improved accuracy of the object detection model.

The image mask may be generated by applying at least one spatial filter. The image mask may be generated by applying at least one of a first dilation filter, an erosion filter, a smoothing filter, a thresholding filter, and a second dilation filter. The image mask may be referred to as an initial mask and a final mask may be generated by applying at least one of the above filters. The final mask may be a binary mask, with white in the mask representing regions to keep and black representing regions to remove.

The dilation max filter may increase the masked area of each masked pixel. The erosion filter may remove (unwanted) noise by eliminating (small) masked regions that are not connected to a larger mass (e.g., the masking of the adversarial patch). The smoothing and thresholding filters may be applied to close small holes in the mask and remove any remaining unwanted noise. The second dilation filter may be applied to (slightly) increase the final masking to cover a larger area of the adversarial patch (if present) and prevent partial masking. For instance, the dilation (max) filter may increase the area around the masked pixels based on the size of the dilation filter. That is, the dilation filter may not enlarge the mask itself but instead enlarge the area around the masked pixels. For instance, the inventors used a dilation filter size of 11, extending each masked pixel by a square mask of 11x11 pixels, with the original masked pixel at the centre of the new masked region.

The adversarial patch may be at least one of a disappearance patch (for disappearance attacks, which may otherwise be referred to as object-vanishing attacks), an illusion patch (for illusion attacks, which may otherwise be referred to as object-mislabelling attacks) and a creation patch (for phantom/creation attacks, which may otherwise be referred to as object-fabrication attacks).

An information processing apparatus for removing adversarial patches in an image, may comprise a memory and a processor connected to the memory, the processor being configured to carry out any of the method steps detailed above. The information processing apparatus may further comprise an image capturing device configured to capture the input image. For instance, the image capturing device may be a camera which generates a digital representation (the input image) of a scene in front of the camera. The captured image may be provided at the input image.

The processor may be further configured to input the de-styled image into an object detection model and detect an object in the image. The information processing device also comprise a display (such as a screen/monitor) and the detected object may be output on the display.

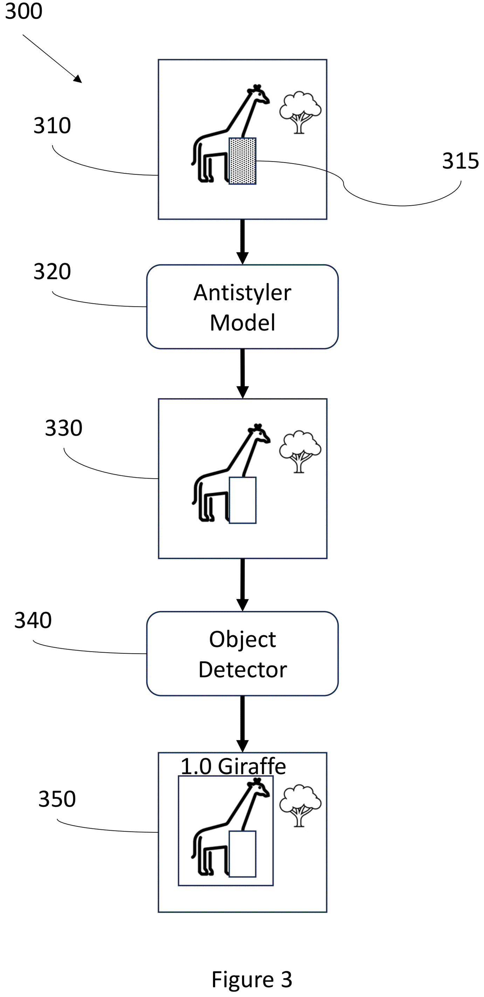

**Figure 3** shows a model architecture 300 for removing an adversarial patch from an image. An input image 310, in this instance an image of a giraffe, including an adversarial patch 315 may be input into the 'Antistyler' model 320. The AntiStyler model may perform steps of the methods disclosed herein. The model may be referred to as an 'AntiStyler' as it removes a random noise style applied to the image. In other words, the AntiStyler model may de-style the input image.

A final image 330 generated by the model comprises the initial image with an image mask applied. In this example the input image includes an adversarial patch and a mask (for example as previously described) is applied to remove the adversarial patch from the image. For instance, the mask may be subtracted from the input image to remove the patch. In an instance where the input image does not contain an adversarial patch (i.e., a benign image) the mask may be applied and the input image may stay in the same/substantially the same form. That is, with no adversarial patch present the mask may not affect/alter the input image. In another example, the output of the model may be a de-styled image. The de-styled image may comprise the input image with the style removed and without the mask added.

The final image (or de-styled image) may be input into an object detector 340. The object detector may be any suitable model for detecting objects in images. For instance, the object detector may be a pretrained convolutional neural network for detecting objects in images. The object detector may output a determination of an object, or objects, in the final image. In this example, the adversarial patch may have been designed to confuse an OD model into classifying the giraffe as a dog. However, the CNN output image 350 shows the correct detection of a giraffe, thereby indicating the effectiveness of the method for removing adversarial patches.

The methods described herein present a post-training defence which may overcome existing challenges of post-training defenses including: a rapid solution with minimal impact on the model's inference time; minimal/no/improved affect the model's performance on clean data; a model- patch- and attack- agnostic solution; and a trainless solution: does not require training, making it a fully agnostic zero-shot defence against adversarial patch attacks.

Compared with in-training defense, the methods described herein may feature: model-agnostic capabilities which may be applied to any suitable OD model/architecture; patch-agnostic capabilities as it does not rely on any prior knowledge (appearance, size, shape, quantity, location, etc.) regarding the specific patch that is used to attack the model; and also attack-agnostic capabilities as it does not require any pre-generated attack patches for training the defense (as no training is required).

Compared with post-training defenses which often suffer from limitations such as degraded performance on benign (no adversarial patch present) images, the methods described herein may maintain performance on benign images and may process 10-12 FPS, making the methods relevant and useful for real-time OD applications.

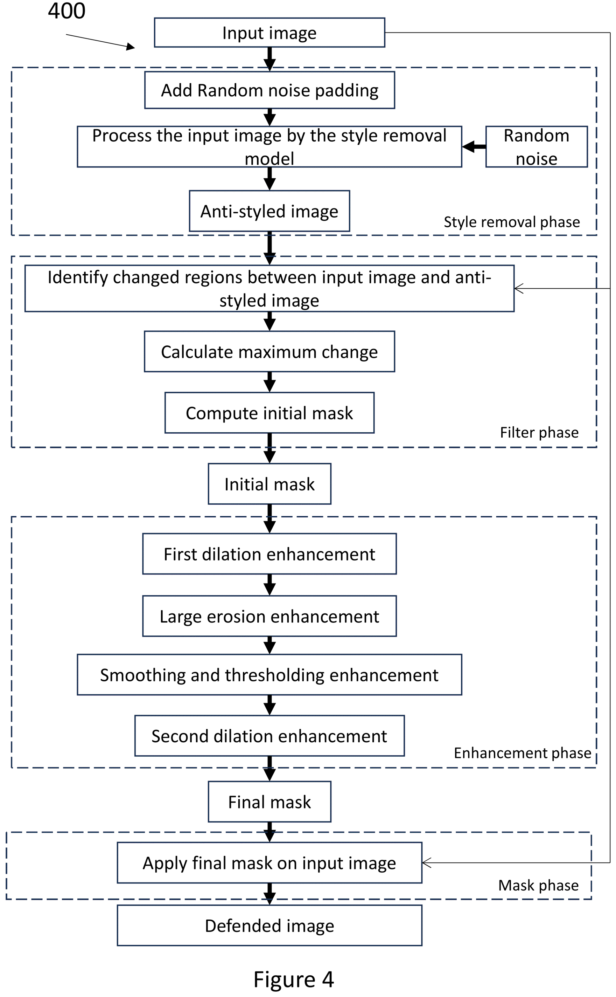

**Figure 4** shows a flow chart of an exemplary method 400 for removing adversarial patches from images.

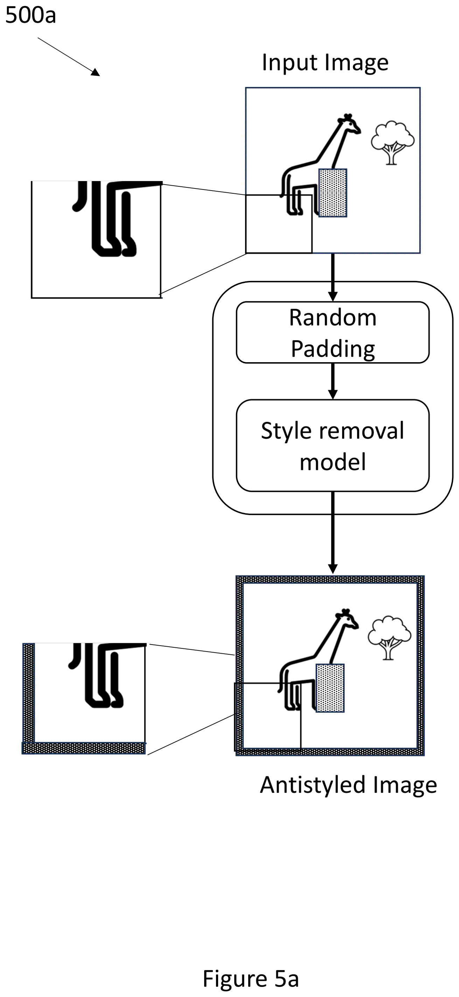

The method may comprise three phases: a style removal phase; a mask generation phase (which may comprise the sub-phases: filter phase and enhancement phase); and a mask application phase (mask phase). Each step in each of the phases is described in relation to Figures 5a-8 below.

In this exemplary method and described below, each phase may be implemented. However, in another example, only the first phase may be implemented. The first phase may generate an anti-styled image, which is also referred to as a de-styled image herein. The anti-styled image may be an effective defense against adversarial patches. Furthermore, in this exemplary method a padding is applied to the input image before the input image is input into style removal model. However, in another example the padding step may be excluded.

**Figure 5a** shows a style removal phase 500a which may be used with the method described herein. The style removal phase may comprise two steps, a random padding step and a style removal step. Given an input image, a random-value padding may be applied to the image and the 'random style' (the style of the image caused by the random padding), may be removed from the padded image using the Anti-Style model, resulting in an anti-styled (de-styled) image. The zoomed in section of the anti-styled image shows padding around the image. The padding may comprise random noise which is different to the random noise which was used to pad the input image.

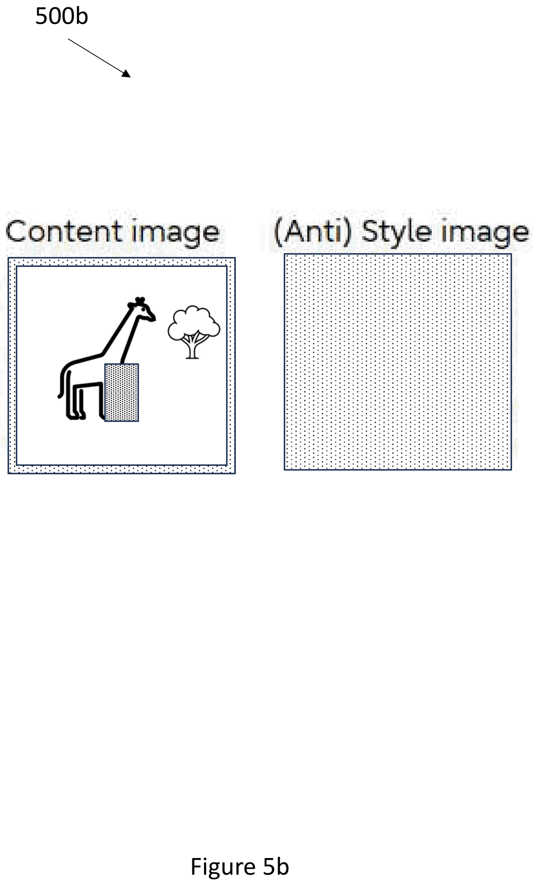

**Figure 5b** shows example images 500b which may be used with the style removal phase. The Figure shows a random noise image (referred to as an (anti)-style image) and a padded input image (referred to as a content image). During the random padding step, the random noise image may be generated and added to the input image as padding. The padding may provide a border of random noise around the image. The padding may be between 5px and 20px and may preferably be 10px wide.

The inventors found that providing a padding around the input image may improve the models perform on benign images. By providing a padding with random noise, the de-styling process may focus on removing the style of the padding. In contrast, with no padding, given a benign image, the de-styling process may mistakenly remove features which present as noise in the images, such as foliage. However, in another example the 'mistaken' removal of the random noise may improve the model's performance (see the evaluation of the DETR model below).

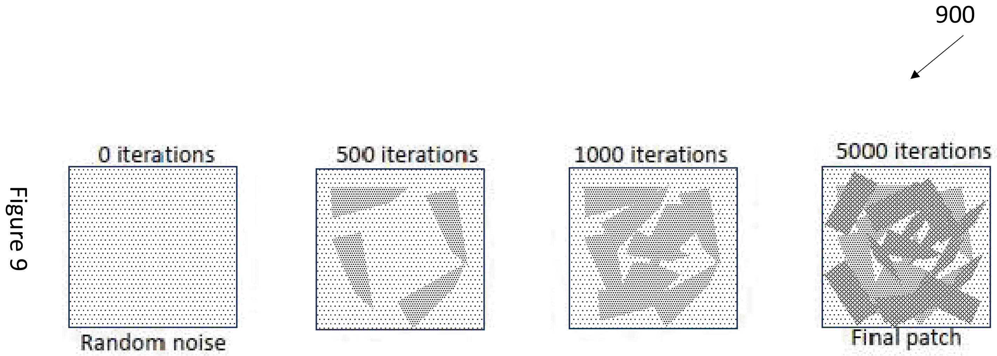

The crafting process of any adversarial patch begins with random noise that is optimized to mislead the object detector. The inventors found that the final adversarial patch must contain some level of visible/invisible noise-like style. See Figure 9 for more details on adversarial patch creation. Thus, by introducing a random noise as padding and removing the random noise using the style removal process below, the random noise padding and adversarial patch may be detected in an input image in a single step.

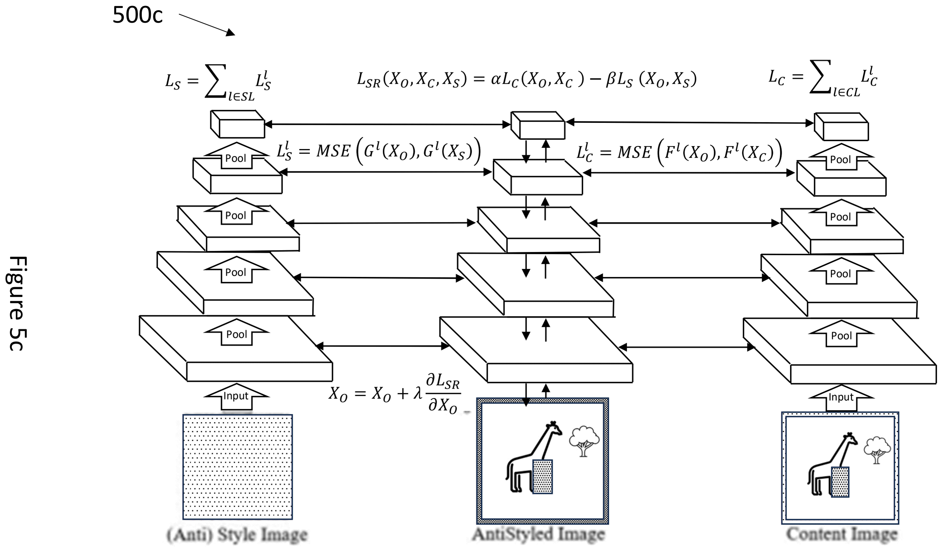

**Figure 5c** shows a style removal architecture/model 500c which may be used to remove the random noise style from the image. That is, the style removal model may perform the step of processing the input image by the style removal model in Figure 4. The content image (or input image if no padding is used) and random noise style image may be input into the antistyle model to remove the random noise style from the content image. In particular, the antistyle model may construct a de-styled image of the input image from semantic content of the input image/content image, with a style from the noise image removed, as explained below.

The inventors surprisingly found that a style transfer technique may be adapted for the style removal model. Style transfer techniques are designed to blend two images into a combined image. Given a content image, style image and an initial blank/random noise, a neural style transfer model generates a new image from the random noise that is based on the content image while incorporating the style properties of the style image. The content of an image may refer to what is depicted in the image, for instance, the subject matter, objects, people, setting, and overall composition. The style of an image may refer to how it is depicted, for instance, the artistic techniques, colours, brushstrokes, lighting, and overall aesthetic choices.

The style transfer (ST) technique, introduce in *[*Leon A Gatys, Alexander S Ecker, and Matthias Bethge. Image style transfer using convolutional neural networks. In Proceedings of the IEEE conference on computer vision and pattern recognition, pages 2414-2423, 2016*]* blends two images by combining the content of one image (the content image) with the style of another image (the style image). When performing ST, a pre-trained CNN-based model is used to extract feature maps (FMs) from the model's intermediate layers for any given image (as shown in the Figure by the layers on the left for the style image and the right for the content image). These layers are then divided into content layers (CL) and style layers (SL). An image's semantic content representation is then determined by the FMs extracted from the CL. The content loss (content loss function) between two images may be defined as the sum of the mean square errors (MSEs) between their content representations as follows: ${L}_{C} \left({X}_{O}, {X}_{C}\right) = {\sum }_{l ∈ CL} MSE \left({F}^{l}\left({X}_{O}\right),{F}^{l}\left({X}_{C}\right)\right)$ (1) where *l* is a layer taken from CL, and *F^{l}* is the corresponding FM. *X_{O}*, and *X_{C}* represent the output and content images, respectively.

In an example, each layer in the CNN may comprise filters and each filter may comprise a feature map. A feature matrix may store each feature map. The feature matrix may also store the size of each feature map. The content loss function may be determined as the mean squared error between the content feature matrix of feature maps of the CL and a corresponding feature matrix of the random noise (i.e., the output *X_{O}*) at an iteration.

In contrast, an image's style representation may be determined by a set of Gram matrices. These matrices are the inner products of each FM extracted from the SL. The style loss between two images may be defined as the sum of the MSEs between their corresponding Gram matrices as follows: ${G}_{i , j}^{l} \left(X\right) = {\sum }_{k} {F}_{i , k}^{l} \left(X\right) ⋅ {F}_{j , k}^{l} \left(X\right)$ (2) ${L}_{S} \left({X}_{O}, {X}_{S}\right) = {\sum }_{l ∈ SL} MSE \left({G}^{l}\left({X}_{O}\right),{G}^{l}\left({X}_{S}\right)\right)$ (3) where *l* is a layer taken from SL, and *G^{l}* is the corresponding Gram matrix. *X_{O}*, and *X_{S}* represent the output and style images, respectively. The Style transfer loss may then be defined by the combination of both losses as follows: $LST \left({X}_{O}, {X}_{C}, {X}_{S}\right) = {αL}_{C} \left({X}_{O}, {X}_{C}\right) + {βL}_{S} \left({X}_{O}, {X}_{S}\right)$ (4) where *L_{C}* is the content loss between the output image and the content image, and *L_{S}* is the style loss between the output image and the style image. α and β are positive hyperparameters that control the trade-off between the two losses. By optimizing the ST loss, the output image may combine both the content representation of the content image and the style representation of the style image, resulting in a blended image of the two original images.

The inventors surprisingly found that the style transfer technique may be extensively altered and applied to the field of adversarial patch defence. The methods described herein provide an altered style transfer process method, which may be referred to as a style removal process (SR). The SR process may maintain the content from a content image while removing the style of a style image. The style removal process may follow an adapted interpretation of the ST process as a variant of domain adaptation [Yanghao Li, Naiyan Wang, Jiaying Liu, and Xiaodi Hou. Demystifying neural style transfer. arXiv preprint arXiv:1701.01036, 2017*.* ] that falls into the field of transfer learning research [Sinno Jialin Pan and Qiang Yang. A survey on transfer learning. IEEE Transactions on knowledge and data engineering,22(10):1345-1359, 2009*.].*

The goal of domain adaptation is to minimize the dissimilarity between the distributions of the source and target domains, which can be done using the maximum mean discrepancy (MMD) metric [Arthur Gretton, Karsten M Borgwardt, Malte J Rasch, Bernhard Scholkopf, and Alexander Smola. A kernel two-sample .. test. The Journal of Machine Learning Research, 13(1):723-773, 2012*.],* measuring the difference between sample means in a reproducing kernel Hilbert space. Previous methods such as Li et al. reformulated the style loss *L_{S}* and presented it as a second-order polynomial kernel of the MMD metric, demonstrating that matching between two Gram matrices (by minimizing the MSE between them) can be interpreted as adapting the domain of the output image to the domain of the style image.

The inventors found that, based on the above interpretation, a similar process of maximizing the MSE between two Gram matrices (the *L_{S}*) may be interpreted as further distancing the domain of the output image from the domain of the style image. Thus, the SR process described herein may be achieved by modifying total loss function, *L_{ST}*, to minimize the content loss while maximizing the style loss by negating the sign of *L_{S}* as follows: ${L}_{SR} \left({X}_{O}, {X}_{C}, {X}_{S}\right) = {αL}_{C} \left({X}_{O}, {X}_{C}\right) - {βL}_{S} \left({X}_{O}, {X}_{S}\right)$ (5)

As described above, the content and style may be extracted from intermediate layers of a CNN. The CNN may be the same of substantially the same as the CNN described in relation to Figure 2 above.

The de-styled image may be constructed by iteratively updating the input image by a gradient descent optimization using the total loss function (as shown by the process in the center of the Figure). Compared with style transfer techniques which start with a random noise image and generate a new image, the style removal process may receive the content image (or input image) as an initial (iteration) image with a target of optimizing the initial iteration image based on the total loss function. The content/input image may therefore be updated at each iteration of the optimization. By using the input (content) image as the input for the optimization process, the processing time and number of optimization steps may be reduced while also maintaining the general appearance of the input image. The total loss function may comprise a difference between a content loss function of the content and a style loss function of the style. The difference may be a weighted difference.

By optimizing the *L_{SR}* loss, the AntiStyler model produces a de-styled image that retains the content of the input image while removing random style in the image. For example, this random style may be introduced due to the random padding and/or may be comprised within the adversarial patch. As the input image can be either benign or adversarial, the presence of a random style is not guaranteed; unwanted effects may result when attempting to remove an absent style from a benign input image. To counter this issue, the (small amount of) padding of random values is added around the input image prior to input into the AntiStyler model, resulting in a padded version of the input image.

The padded image may guarantee the presence of a random style for both benign and adversarial images, allowing the AntiStyler model to focus on removing it from the random padding in benign images, which do not initially have the random style (since no adversarial attack is present). However, in adversarial images, the AntiStyler model may remove the style from both the adversarial patch and the random padding. (The ablation study described herein, compares the performance of both padded and unpadded variants of AntiStyler on benign and adversarial images to highlight the contribution of the random padding to the overall defence method). After applying this phase, the output image is referred to as the AntiStyled image (or de-styled image).

As shown as the output in Figures 5a and 5c, the antistyle image may comprise a random noise padding. However, this random noise padding is associated with the removed style of the image and is therefore different to the random noise padding of the input content image.

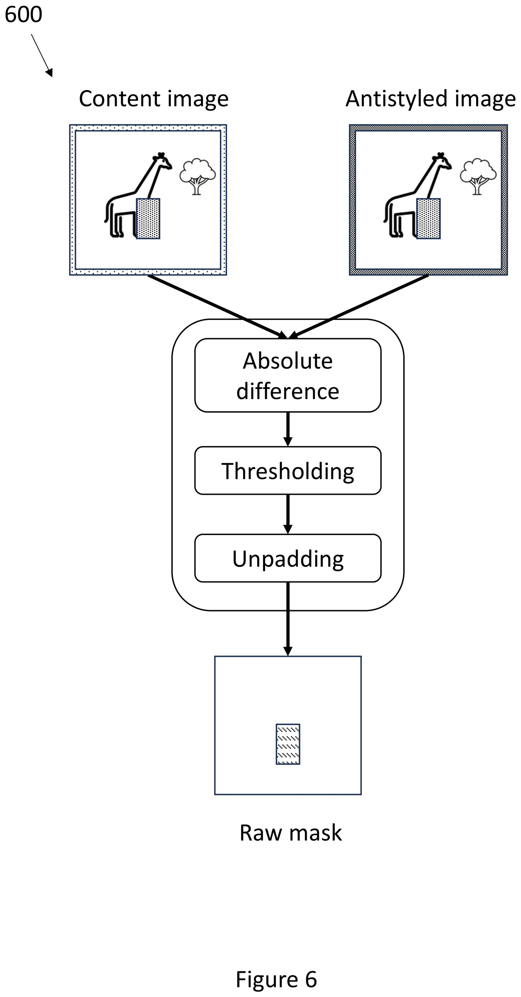

**Figure 6** shows a filtering phase 600 of the mask generation phase. Given the padded content image and the Anti-Styled image, an initial (raw) mask may be generated by filtering the pixels that differ the most between the padded image and the AntiStyled image. This may highlight the pixels which were most affected in the previous phase.

In this phase, changed regions between the content image and anti-styled image are identified and the pixels which differ the most between the input content image and the AntiStyled image are detected. By filtering these pixels, a mask that represents the pixels that had the most significant impact in the SR phase may be generated, which may indicate the location of the adversarial patch attacks.

The filtering method may be defined as follows: $Diff \left[i, j\right] = \left|AntiStyled\left[i, j\right]-Input\left[i, j\right]\right|$ (6) ${Max}_{change} = {max}_{∀ \left(i, j\right)} \left(Diff\left[i, j\right]\right)$ (7) $Mask \left[i, j\right] = \left\{\begin{matrix}1 & Diff \left[i, j\right] \geq τ ⋅ {Max}_{change} \\ 0 & Otherwise\end{matrix}\right.$ (8) where *AntiStyled* and *Input* represent the AntiStyled and input content images, respectively, and *τ* denotes a percentage-based dynamic threshold for the maximum change in pixel values between the two images. The threshold may be between 99.9% and 90%, for example.

The padding may then be removed to generate the raw image mask. After removing the random padding, the resulting raw mask indicates pixels that had the top *τ-*percentage of change following the SR process. The resulting mask may therefore indicate the location of an adversarial patch in the input image, if included. In this example the padding is removed after determining the absolute difference, however this step may be performed before determining the absolute difference. For instance, the padding may be removed from the input content image and the absolute difference may then be determined.

In another example, the input may be the original input image (i.e. without padding) and the anti-styled image. The padding of the anti-styled image may be removed and the difference in pixels between the input image and the 'unpadded' anti-styled image may be compared to generate the raw mask.

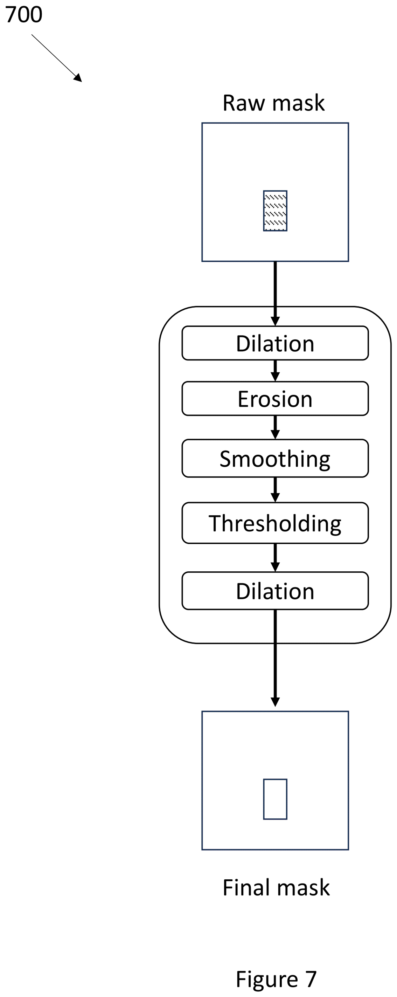

**Figure 7** shows the enhancement phase 700 of the mask generation phase. The enhancement phase may be an optional phase to enhance the raw mask. In one example, the initial raw mask generated in the filtering phase may be used as a final mask. In another example, given the raw initial mask, a series of spatial filters may be applied to enhance the mask and remove unwanted noise, resulting in the final mask.

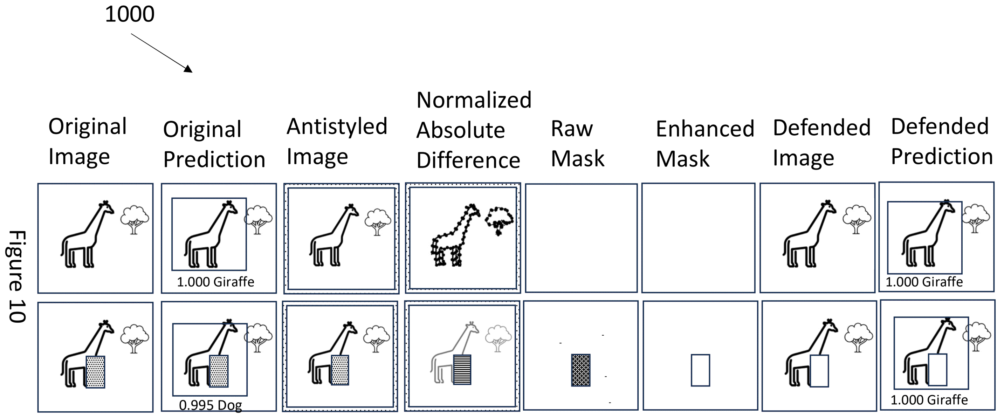

The series of spatial filters may be applied to improve the mask on the patched area while eliminating unwanted benign masking. This is demonstrated in Figure 10 where the raw mask is depicted as a cluster of masked pixels, with a higher concentration in the area of the adversarial patch and a sparser concentration elsewhere in the image (seen as faint dots in the image).

The series of spatial filters may begin with a dilation (max) filter. The dilation max filter increases the masked area of each masked pixel. This may help merge small gaps between masked pixels that are located close to one another. Next, a larger erosion (min) filter may be applied. The erosion filter may remove unwanted noise by eliminating small masked regions that are not connected to a larger mass (i.e., the masking of the adversarial patch). Next, smoothing and thresholding filters may be applied to close small holes in the mask and remove any remaining unwanted noise. Finally, another dilation (max) filter may be applied to (slightly) increase the final masking to cover a larger area of the adversarial patch and prevent partial masking. For instance, the size of the dilation (max) filter may be set between 5 and 15, and preferably 11, to increase the area around the mask.

The resulting mask may be considered the final mask of the AntiStyler defense, masking areas in the image with a high concentration of masked pixels which may correspond to adversarial patches.

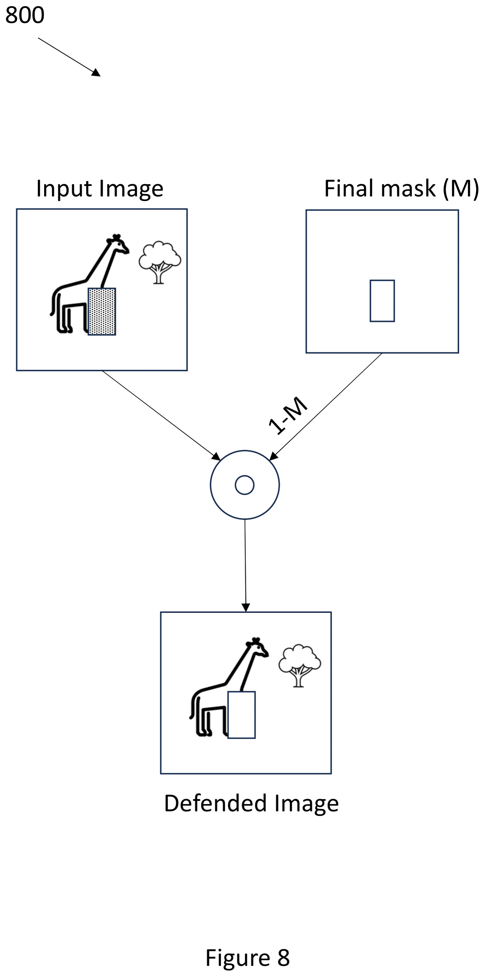

**Figure 8** shows the mask phase 800 (which may otherwise be referred to as the mask application phase. The final mask is applied to the input image to generate the final image, which is referred to as the defended image here. The mask may be a negative mask and may be applied to the input image resulting in the defended image which may then be forwarded to an object detection model for prediction.

Thus, the methods described herein may present a rapid and robust, fully agnostic, zero-shot adversarial defense for OD models based on a style removal technique. The style removal technique may provide effective localization and masking of an adversarial patch by masking regions of an image which exhibit a random style. The model may adapt the style transfer (ST) technique to remove random styles which may be associated with adversarial patches.

**Figure 9** shows an example 900 of an adversarial patch creation process. The crafting process of an adversarial patch may begin with a random noise image which is then optimized to mislead an object detector model. The image is iterated a number of times, for instance 5000 times in this example. However, the final patch will likely still contain some level of visible/invisible noise-like style. The methods described herein locate and hide the patch by identifying the image areas that contain this noise-like style.

The original adversarial patch attack [Tom B Brown, Dandelion Mane, Aurko Roy, Martin Abadi,614 and Justin Gilmer. Adversarial patch. arXiv preprint arXiv:1712.09665, 2017*.]* was designed for the image classification task but later was adapted for the OD domain. This attack was defined as the following optimization problem: $\hat{P} = arg {max}_{P} {E}_{x , t , l} \left[log Pr\left(\hat{y}\left|h\left(A\left(P, x, l, t\right)\right)\right.\right)\right]$ (9) where h(A(P, x, l, t)) denote the model's prediction after a function applying the patch P to original image x at location l with transformation t and P *r*(*ŷ*|*A*) is the probability of classifying input A as class *ŷ*. By selecting the patch with the maximum expected log *P r*(*ŷ*|*A*), the patch was optimized to be effective under multiple images, locations, and transformations, improving the patch's robustness to the real world.

Further types of patches have been developed including:
Google [Tom B Brown, Dandelion Mane, Aurko Roy, Martin Abadi, and Justin Gilmer. Adversarial patch. arXiv preprint arXiv:1712.09665, 2017*];*
M-PGD [Aleksander Madry, Aleksandar Makelov, Ludwig Schmidt, Dimitris Tsipras, and Adrian Vladu. Towards deep learning models resistant to adversarial attacks. arXiv preprint arXiv:1706.06083, 2017*];*
DPatch [Xin Liu, Huanrui Yang, Ziwei Liu, Linghao Song, Hai Li, and Yiran Chen. Dpatch: An adversarial patch attack on object detectors. arXiv preprint arXiv:1806.02299, 2018*.];*
TSEA [Hao Huang, Ziyan Chen, Huanran Chen, Yongtao Wang, and Kevin Zhang. T-sea: Transfer-based self-ensemble attack on object detection. In Proceedings of the IEEE/CVF conference on computer vision and pattern recognition, pages 20514-20523, 2023*.];*
Printable [Simen Thys, Wiebe Van Ranst, and Toon Goedeme. Fooling automated surveillance cameras: adversarial patches to attack person detection. In Proceedings of the IEEE/CVF conference on computer vision and pattern recognition workshops, pages 0-0, 2019*.];* and
Natural patch [Yu-Chih-Tuan Hu, Bo-Han Kung, Daniel Stanley Tan, JunCheng Chen, Kai-Lung Hua, and Wen-Huang Cheng. Naturalistic physical adversarial patch for object detectors. In Proceedings of the IEEE/CVF International Conference on Computer Vision, pages 7848-7857, 2021*.]*

The methods described herein may effectively remove such adversarial patches from images, as described in the evaluation below.

**Figure 10** shows the results 1000 from applying the exemplary method described in relation to Figure 4 to benign and adversarial images. The first row shows an example of applying the method to a benign input image. The second row shows an example of applying the method to an input image including an adversarial patch. As shown in the figure, by removing pixels associated with the random style from an input image, the methods described herein effectively mask the adversarial patch in attacked images while having almost no effect on benign images.

The inventors evaluated the effectiveness of their defense method against other known methods as follows:
**Datasets** The evaluation against digital attacks was performed on images taken from the COCO [Tsung-Yi Lin, Michael Maire, Serge Belongie, James Hays, 695 Pietro Perona, Deva Ramanan, Piotr Dollar, and C Lawrence Zitnick. Microsoft coco: Common objects in context. In Computer Vision-ECCV 2014: 13th European Conference, Zurich, Switzerland, September 6-12, 2014, Proceedings, Part V 13, pages 740-755. Springer, 2014*.]* and INRIA [Navneet Dalal and Bill Triggs. Histograms of oriented gradients for human detection. In 2005 IEEE computer society conference on computer vision and pattern recognition (CVPR'05), pages 886-893. Ieee, 2005*.]* datasets. The COCO dataset is widely used for the OD task, containing over 120,000 images with precise bounding box annotations across 80 classes. Approximately 20,000 images from the COCO test set were used. In contrast, the INRIA dataset specifically focuses on the person detection task, consisting of 614 images for training and 288 for testing.

The evaluation against physical attacks was performed on images taken from the Superstore [Omer Hofman, Amit Giloni, Yarin Hayun, Ikuya Morikawa, Toshiya Shimizu, Yuval Elovici, and Asaf Shabtai. X-detect: Explainable adversarial patch detection for object detectors in retail. Machine Learning, pages 1-20, 2024*]* and APRICOT [Anneliese Braunegg, Amartya Chakraborty, Michael Krumdick, Nicole Lape, Sara Leary, Keith Manville, Elizabeth Merkhofer, Laura Strickhart, and Matthew Walmer. Apricot: A dataset of physical adversarial attacks on object detection. In Computer Vision-ECCV 2020: 16th European Conference, Glasgow, UK, August 23-28, 2020, Proceedings, Part XXI 16, pages 35-50. Springer, 2020*]* datasets. The Superstore dataset contains 2,200 images of common store products split into 1,600 training images and 600 testing images. Superstore simulates the adversarial threat by using printed adversarial patches to deceive a smart shopping cart system into detecting expensive products as cheap ones. In contrast, the APRICOT dataset contains 1,011 images of printed adversarial patches in public locations, split into 873 training images and 138 test images. Both datasets include adversarial images under different natural variations in position, distance, lighting conditions, and viewing angle. Since the methods disclosed herein do not require training, only images from each dataset's test set were utilized.

**Target Object Detectors** The object detectors used in the evaluation, and which therefore may be used with methods disclosed herein, were the Faster R-CNN *[*Shaoqing Ren, Kaiming He, Ross Girshick, and Jian Sun. Faster r-cnn: Towards real-time object detection with region proposal networks. Advances in neural information processing systems, 28, 2015] and DETR [Nicolas Carion, Francisco Massa, Gabriel Synnaeve, Nicolas Usunier, Alexander Kirillov, and Sergey Zagoruyko. End-to-end object detection with transformers. In European conference on computer vision, pages 213-229. Springer, 2020*.]* SOTA OD models. Both Faster R-CNN and DETR employ the ResNet-50 [Kaiming He, Xiangyu Zhang, Shaoqing Ren, and Jian Sun. Deep residual learning for image recognition. In Proceedings of the IEEE conference on computer vision and pattern recognition, pages 770-778, 2016*.]* backbone, with Faster R-CNN also incorporating the feature pyramid network [Tsung-Yi Lin, Piotr Dollar, Ross Girshick, Kaiming He, Bharath Hariharan, and Serge Belongie. Feature pyramid networks for object detection. In Proceedings of the IEEE conference on computer vision and pattern recognition, pages 2117-2125, 2017*],* for its region proposal network. Both models were pretrained on COCO's training set. Additional experiments were performed on the YOLOv11 (https://github.com/ultralytics/ultralytics [Accessed 23 January 2025]) and RT-DETRv2 OD model (https://github.com/lyuwenyu/RT-DETR, [Accessed 23 January 2025]).

**Compared Defenses** The AntiStyler model implementing the exemplary method according to Figures 4 to 8, was compared with four SOTA adversarial patch defenses: LGS [Muzammal Naseer, Salman Khan, and Fatih Porikli. Local gradients smoothing: Defense against localized adversarial attacks. In 2019 IEEE Winter Conference on Applications of Computer Vision (WACV), pages 1300-1307. IEEE, 2019.], SAC [Jiang Liu, Alexander Levine, Chun Pong Lau, Rama Chellappa, and Soheil Feizi. Segment and complete: Defending object detectors against adversarial patch attacks with robust patch detection. In Proceedings of the IEEE/CVF Conference on Computer Vision and Pattern Recognition, pages 14973-14982, 2022], ObjectSeeker [Chong Xiang, Alexander Valtchanov, Saeed Mahloujifar, and Prateek Mittal. Objectseeker: Certifiably robust object detection against patch hiding attacks via patch-agnostic masking. In 2023 IEEE Symposium on Security and Privacy (SP), pages 1329-1347. IEEE, 2023*.],* and PAD [Lihua Jing, Rui Wang, Wenqi Ren, Xin Dong, and Cong Zou. Pad: Patch-agnostic defense against adversarial patch attacks. arXiv preprint arXiv:2404.16452, 2024*.].*

LGS smooths regions in the image that have a high variation in pixel values to mitigate adversarial patch attacks, while SAC trains a custom segmentation model (using the provided checkpoint weights), followed by a shape completion algorithm, to identify and mask these attacks. The ObjectSeeker defense focuses on countering attacks that make objects disappear by combining predictions of multiple masked versions of the original image, and the PAD defense mitigates adversarial attacks by identifying regions in the image that show semantic independence and spatial heterogeneity. For each defense, the conference and publication year are presented in brackets.

**Adversarial Patch Attacks** The Google, M-PGD, DPatch, TSEA, Printable and Natural patch attacks (referenced above in Figure 9) were evaluated as well as three adaptive patch attacks. For each attack, approximately 300 patches were generated to create the adversarial images. The method described herein may also be effective for other types of patch. For instance, the method described herein may be effective for any patch created from random noise.

**Style removal settings:** The inventors used the parameters in Gatys et al (which uses a traditional style transfer technique) for their style removal model, although these parameters were adapted where appropriate. The Padding size of noise was set to 10px. Other padding sizes may be used.

**Evaluation Metrics** The mean average precision (mAP) metric at an intersection over union (IoU) of 0.5 was used for evaluation, as provided by the COCO API [*Microsoft. cocoapi*/*PythonAPI*/*pycocotools at master* · *cocodataset*/*cocoapi github.com,.https:*//*github.com*/*cocodataset*/*cocoapi*/*tree*/*master*/*PythonAPI*/*pycoc otools, 2020. [Accessed 31-05-2024].].* The image processing time of each defense was calculated as the mean time (in milliseconds) over all the images. The processing rate was then calculated by dividing one second by the mean image processing time. For each reported result, the best performance appears in bold, and the second-best performance is underlined.

**Hyperparameters for the Filter and Enhancement Phases** For the COCO dataset, the top-change filtering percentage (τ) was set to 0.99, the kernel size for the dilation and erosion filters was set to 11, the kernel size for the smoothing filter was set to 51, and the final threshold was set to 0.5. These parameters were obtained according to a validation set containing images that did not appear in the test set and were attacked only by the PGD attack.

For the INRIA dataset, the τ was set to 0.9575, the kernel size for the dilation and erosion filters was set to 11, the kernel size for the smoothing filter was set to 5, and the final threshold was set to 0.6. Note that these parameters were obtained according to a validation set containing images that did not appear in the test set and were attacked only by the OBJ, P1, and P2 patches. For the Superstore dataset, τ was set to 0.94, the kernel size for the dilation and erosion filters was set to 11, the kernel size for the smoothing filter was set to 51, and the final threshold was set to 0.5.

For the APRICOT dataset, τ was set to 0.99, the kernel size for the dilation and erosion filters was set to 11, the kernel size for the smoothing filter was set to 5, and the final threshold was set to 0.1. These parameters were obtained for both datasets according to a validation set containing images that did not appear in the test set. Thus, the hyperparameters may be determined from empirical results. The hyperparameters may be determined from a hyperparameter tuning algorithm.

**Setting the Random Seed** To allow replicating AntiStyler's results in the evaluation sections, a random seed was set to 123 using the commands: environ['PYTHONHASHSEED'] = 123 from the OS module (https://docs.python.org/3/library/os.html), backends.cudnn.deterministic = True and backends.cudnn.benchmark = False from the Torch package (https://pytorch.org/ [Accessed: 1 September 2023]) and seed everything(123) from the Torch lightning package ( https://lightning.ai/docs/pytorch/stable/ [Accessed: 1 September 2023]) .

**Implementation Details:** The evaluation was performed using a Geforce RTX 3090 GPU, Python 3.7, Torch 1.13, Torchvision 0.14, Numpy 1.21, and ART 1.15.1. For the SR phase, a pretrained VGG-19 network [Karen Simonyan and Andrew Zisserman. Very deep convolutional networks for large-scale image recognition. ArXiv preprint arXiv:1409.1556, 2014*.]* was used. The first five convolutional layers of the CNN were taken as the style layers and the fourth convolutional layer as the content layer. To ensure a fair evaluation, the parameters were optimized based on images that were not part of the test set. Accordingly, the weight ratio between the style and the content losses was set to 1000:1 (i.e.*α* and *β* is equation 5), the number of optimization steps to 1, and the padding size to 10.

**Evaluation Results for Digital Attacks** The results of the evaluation are presented in Table 1, in terms of image processing time and adversarial robustness. Image Processing Time: As shown in Table 1, all the defenses increase the undefended model's processing time; however, when examining the processing time of each defense, the LGS, ObjectSeeker, and PAD models are relatively slow (a minimum of 700ms per image). In contrast, SAC and the method described herein (referred to as 'AntiStyler' in the Table) have short processing times (approximately 80 ms per image). LGS, Object-Seeker, and PAD are window-based approaches, i.e., they split a given image into multiple smaller windows, each processed separately. For example, given an image, LGS calculates its normalized gradient magnitudes and applies a windowing operation to search for windows with high activations (i.e., high mean gradient magnitude) and smooth them based on their gradients. This leads to a trade-off between the image-to-window size ratio and processing time.

The evaluation followed the window sizes used by each method in the methods paper evaluation; therefore, while these methods demonstrate high adversarial robustness (as reflected in the results), their processing times may be unrealistic in real-life use cases such as surveillance and autonomous vehicles. Real-time OD applications typically require ~10 FPS; therefore, when considering the system's processing time, only SAC and AntiStyler may be considered for real-time OD. However, when considering robustness, the methods described herein outperforms SAC.

**Table 1. mAP%, processing time, and processing rate for different OD models and patch attacks on the COCO dataset.**

| Detection Model | Defense Method | Processing Time [ms] | Processing Rate [FPS] | Google | | M-PGD | | DPatch | |
|---|---|---|---|---|---|---|---|---|---|
| | | | | Benign | Adv | Benign | Adv | Benign | Adv |
| Faster R-CNN | Undefended | I 43.2 | 23-24 | 51.6 | 16.6 | 45.8 | 22.3 | 49.4 | 23.0 |
| | LGS (WACV19) | 713.8 | 1-2 | 42.5 | 26.8 | 38.0 | 30.8 | 43.2 | 27.7 |
| | SAC (CVPR22) | **78.0** | **12-13** | **51.6** | 22.7 | **45.8** | 35.5 | **49.4** | 31.5 |
| | ObjectSeeker (SP23) | 4191.9 | ~ 0 | **51.6** | 31.0 | 44.5 | 28.4 | 48.0 | 28.4 |
| | PAD (CVPR24) | 55098.8 | ~ 0 | 39.8 | 27.2 | 39.0 | 36.0 | 43.0 | 35.9 |
| | **AntiStyler** | 92.7 | 10-11 | **51.6** | **32.5** | **45.8** | **38.0** | 48.9 | **38.3** |
| DETR | Undefended | 39.3 | 25-26 | 52.8 | 30.8 | 53.6 | 29.0 | 56.8 | 35.5 |
| | LGS (WACV19) | 705.8 | 1-2 | 45.3 | **36.0** | 48.2 | 36.3 | 47.3 | 43.8 |
| | SAC (CVPR22) | **71.7** | **13-14** | **51.9** | **34.6** | 53.5 | 32.9 | 56.7 | 43.1 |
| | ObjectSeeker (SP23) | 4072.4 | ~ 0 | 52.8 | 35.0 | 50.5 | 36.2 | 56.8 | 40.8 |
| | PAD (CVPR24) | 54721.5 | ~ 0 | 50.6 | 33.7 | 46.1 | **40.2** | 55.2 | **46.3** |
| | **AntiStyler** | 85.6 | 11-12 | **53.0** | **41.7** | **53.6** | 39.6 | **57.8** | **44.4** |

Adversarial Robustness: When considering the different attacks employed, only images in which the attack succeeded were used in the evaluation, i.e., each attack succeeded on different images. Therefore, each attack column was separated in the table into two sub-columns: benign and adv (adversarial). The adv column presents the defense's performance on images successfully attacked with the specific adversarial attack, and the benign column presents the defense's performance on the corresponding benign images (images without the attack). The results demonstrate that AntiStyler outperformed the other defenses in most benign cases on both the Faster R-CNN and DETR OD models. While other defenses reduce the undefended model's benign performance, AntiStyler maintains its performance and even shows slight improvements when applied to DETR. Additionally, AntiStyler outperformed the other defenses in all adversarial experiments on the Faster R-CNN OD model, with an average increase of approximately 15mAP(%). On the DETR OD model, AntiStyler outperformed the other examined defenses in the Google column and achieved second-best performance in the DPatch and M-PGD columns, with an average increase of approximately 10 mAP(%). When only considering adversarial robustness, AntiStyler achieved the second-best performance, outperformed only by PAD. However, PAD requires a high processing time of approximately 55 seconds per image, which may not be realistic for real-time OD use cases. Therefore, when considering the trade-off between a defense's processing time, benign performance, and adversarial performance, AntiStyler may offer the overall best performance and trade-off.

**Ablation Study:** The importance of each phase in AntiStyler's pipeline was evaluated by comparing different variants of the AntiStyler defense on the COCO dataset as compared to the fully implemented model. These variants include: (1) UP-AntiStyler - an AntiStyler variant without padding, (2) UM-AntiStyler - an AntiStyler variant that returns the AntiStyled image without the filter, enhancement, and mask phases, and (3) RM-AntiStyler - an AntiStyler variant that masks the input image using the raw mask without the enhancement phase. Of course, other variants of the AntiStyler model may be used such as a version in which the input image (with no padding) is input into the style removal model to generate a de-styled image. The de-styled image may then be used as the final defended image.

Table 2 presents the performance of each tested AntiStyler variant on the Faster R-CNN evaluation from the above evaluation. As can be seen, the UP variant achieved the second-best performance across all the adversarial columns while slightly compromising AntiStyler's benign performance. By adding the random padding, a random style is introduced to both the benign and adversarial images. This enables the model to mask only the padding of benign images without affecting their content while maintaining the mask on the attack in the adversarial images.

The results of the UM and RM variants demonstrate that while the SR phase affects the adversarial patches, simply removing the random style without the subsequent filtering and masking phases may compromise AntiStyler's level of benign and adversarial performance, although the model is still effective. By filtering the raw mask and enhancing it in the enhancement phase, AntiStyler may remove possible unwanted benign masking while improving the final mask's performance against the adversarial patch attacks.

Thus, as demonstrated by the ablation study, the methods described in relation to Figures 4 to 8 may not require each step to effectively remove the adversarial patch. However, as shown in Table 2 above, the method may be most effective when each step (or phase) is included.

**Table 2. mAP% for ablated variants of AntiStyler on the COCO dataset and the Faster R-CNN OD model.**

| Defense Method | Google | | M-PGD | | DPatch | |
|---|---|---|---|---|---|---|
| | Benign | Adv | Benign | Adv | Benign | Adv |
| Undefended | 51.6 | 16.6 | 45.8 | 22.3 | 49.4 | 23.0 |
| UP-AntiStyler | 38.8 | 30.6 | 37.7 | 35.7 | 42.2 | 37.7 |
| UM-AntiStyler | 49.3 | 29.3 | 43.3 | 32.2 | 47.3 | 33.4 |
| RM-AntiStyler | 48.1 | 30.4 | 41.5 | 35.3 | 45.5 | 35.2 |
| **AntiStyler** | **51.6** | **32.5** | **45.8** | **38.0** | **48.9** | **38.3** |

### Adaptive Attacks

When targeting an adversarial defense, an attacker may exploit three types of knowledge: black, gray, and white box. To replicate these scenarios, AntiStyler was evaluated against three corresponding adaptive attacks. In a black box setting, an attacker may only know that AntiStyler targets the random style and attempt to remove it by minimizing the patch's total variation (TV) during the optimization process. By reducing the patch's TV, the resulting patch achieves a smoother and less random style; accordingly this attack may be referred to as a Black-box Patch. In a gray box setting, an attacker may only have partial access, e.g., AntiStyler's SR process, and may incorporate it into the patch's optimization process. In this case, the optimization process reduces the presence of random style in the resulting patch by consistently applying the SR process; accordingly, this attack may be referred to as a Gray-box Patch. In a white box setting, an attacker has full access to AntiStyler and can fully incorporate it into the patch's optimization process. Since some of AntiStyler's components are non-differentiable, Gradient Approximations (GAPs) may be utilized to incorporate AntiStyler into the patch optimization process and this attack may be referred to as a White-box Patch.

Table 3 compares the performance of AntiStyler and the undefended model under these three adaptive attacks on the Faster R-CNN model. These results align with expectations based on the attacker's knowledge in each setting: In the black box setting, the attacker only smooths the patch by minimizing the TV, which does not sufficiently reduce the random style, allowing AntiStyler to still mask the patch pixel, resulting in a 7 mAP(%) improvement. In the gray box setting, the attacker removes a specific random style at each iteration (as each step generates a new style image); however, it does not sufficiently cover all the possible combinations of the style image (3^{*image*_*width·image*_*height*} for RGB images), resulting in a 6 mAP(%) improvement. Lastly, in the white box setting, the attacker incorporates AntiStyler into its optimization but relies on GAPs, which may introduce errors and inefficiencies in the attack's optimization process, resulting in a 5 mAP(%) improvement.

**Table 3. mAP% for three adaptive patch attacks on the COCO dataset and the Faster R-CNN OD model.**

| Defense Method | Black-box Patch | Gray-box Patch | White-box Patch |
|---|---|---|---|
| Undefended | 23.4 | 22.3 | 18.7 |
| **AntiStyler** | **30.5** | **28.2** | **23.9** |

Transferable, Printable and Natural Patches: The evaluations described above were performed on images from the COCO dataset with a single patch in each image. The Antistyle method was also evaluated on the INRIA dataset when multiple patches of the same attack type (transferable [Hao Huang, Ziyan Chen, Huanran Chen, Yongtao Wang, and Kevin Zhang. T-sea: Transfer-based self-ensemble attack on object detection. In Proceedings of the IEEEICVF conference on computer vision and pattern recognition, pages 20514-20523, 2023*.],* printable [Simen Thys, Wiebe Van Ranst, and Toon Goedeme. Fooling automated surveillance cameras: adversarial patches to attack person detection. In Proceedings of the IEEE/CVF conference on computer vision and pattern recognition workshops, pages 0-0, 2019*]* and natural [Yu-Chih-Tuan Hu, Bo-Han Kung, Daniel Stanley Tan, JunCheng Chen, Kai-Lung Hua, and Wen-Huang Cheng. Naturalistic physical adversarial patch for object detectors. In Proceedings of the IEEE/CVF International Conference on Computer Vision, pages 7848-7857, 2021*.]* patches) appear in the same image, with the results reported in Table 4.

The AntiStyler method maintained the benign improvement on the INRIA dataset, outperforming all the other defenses. As for the adversarial attacks, AntiStyler outperformed the other defenses on the transferable, printable, and two natural patches (P1 and P4). While AntiStyler's performance on the P2 patch is close to PAD's performance, it is important to note that PAD's processing time renders it impractical for real-time, making AntiStyler the overall optimal defense when considering the time constrictions.

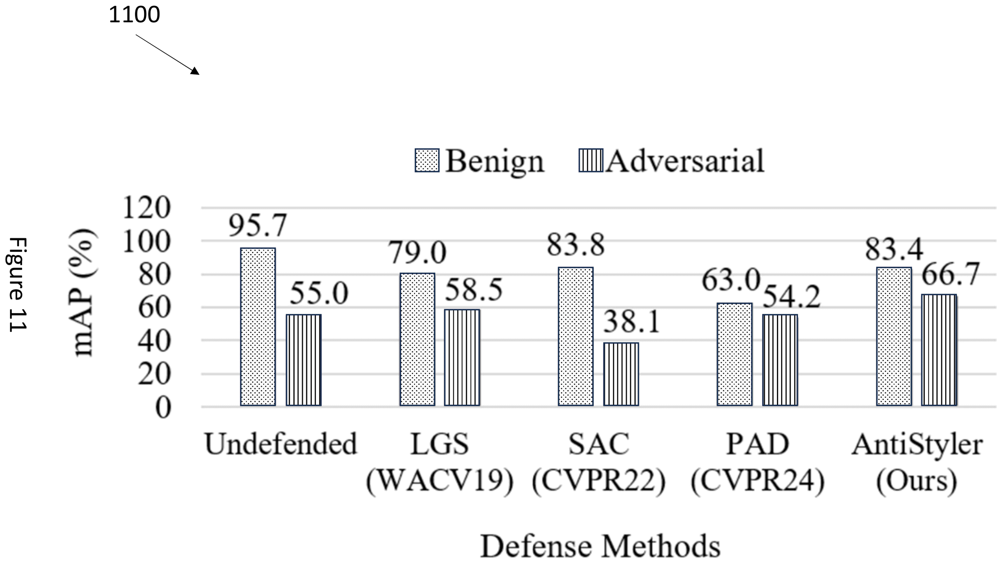

**Figure 11** shows a graph 1100 comparing mean average precision (mAP%) for physical patch attacks on a Superstore dataset with the Faster R-CNN object detection model.

**Table 4. mAP% for different transferable, printable and natural patches on the INRIA dataset and the Faster R-CNN OD model.**

| Defense Method | Benign | TSEA | | Printable Patches | | | Natural Patches | | | |
|---|---|---|---|---|---|---|---|---|---|---|
| | | B-Patch | C-Patch | OBJ | UPPER | CLS-DET | P1 | P2 | P3 | P4 |
| Undefended | 94.9 | 17.6 | 17.3 | 45.6 | 40.2 | 59.7 | 54.6 | 66.2 | 53.1 | 67.4 |
| LGS (WACV 19) | 94.8 | 54.9 | 47.7 | 76.9 | 75.6 | 66.1 | 68.7 | 74.2 | 69.7 | 77.2 |
| SAC (CVPR22) | 94.9 | 35.4 | 35.4 | 62.1 | 72.4 | 69.4 | 56.6 | 66.1 | 53.2 | 73.3 |
| ObjectSeeker (SP23) | 95.1 | 16.2 | 17.6 | 44.9 | 41.1 | 61.2 | 55 | 60.8 | 49.6 | 69 |
| PAD (CVPR24) | 94.9 | 54.2 | 86.2 | 78.5 | 78.7 | **80.2** | 74.3 | **82.3** | **79.2** | 81.4 |
| **AntiStyler** | **95.8** | **94.9** | **87.8** | **82.0** | **83.0** | **80.2** | **74.4** | 81.9 | 57.3 | **81.7** |

Evaluation Results for Physical Attacks: The above evaluations were performed for digital attacks; however, physically printable attacks present real world threats to OD models. To evaluate AntiStyler's performance against these attacks, the Superstore and APRICOT datasets were used. Figure 11 compares AntiStyler's performance to the other defenses on Superstore's test images. Since ObjectSeeker focuses on hiding attacks and the Superstore dataset utilizes illusion attacks (altering the object's label), the ObjectSeeker was excluded for a fair comparison.

All the defenses reduce the benign performance, and although in this example SAC demonstrated top benign performance, AntiStyler ranked second place with performance that approaches that of SAC. On the other hand, compared to the other defenses, AntiStyler improved the adversarial performance, obtaining the best overall performance. Thus, the AntiStyler method may perform effectively for real world applications.

An example of an implementation which the methods described herein may be used in are (smart) self-checkout systems. Over the past years, self-checkout systems in supermarkets have advanced significantly, utilizing complex machine-learning models to recognize products. A scenario may occur where a customer attempts to exploit the self-checkout system to avoid paying for an item. To accomplish this, the customer may craft a sophisticated patch, and places it on the item, which causes the ML model to misidentify it. The AntiStyler may be employed to mitigate the effect of such attacks by enhancing the quality and effectiveness for recognising adversarial patches. As described herein, the AntiStyler method may utilize a customized version of the style transfer process to eliminate the effect of the adversarial patch on an object model's prediction.

The self-checkout system may receive an image of an item as an input. For instance, the self-checkout system may comprise an image capturing device which captures and image and provides the image as an input image. The system may then pad the image with random noise and create the anti-styled image by using the style removal model. Then, the difference between the input and anti-styled images may be calculated. An initial mask may be is created, then enhancements may be applied to create a final mask. Finally, the final mask may be added to the input image to cover the adversarial patch. The altered final image with the patch may be input into an object model to detect the object. The AntiStyler method may therefore enhance a regular customer experience. When a detection technique triggers a false alarm, it may put the customer's shopping process on pause. However, AntiStyler may provide a robust solution that adjusts the input scene for the object detection model without any human intervention.

Mitigating Adversarial Patches with Noise Removal: The methods described herein mask adversarial patches by identifying regions in an image affected by removing a "random" style. A known method referred to as DIFFender [Caixin Kang, Yinpeng Dong, Zhengyi Wang, Shouwei Ruan, Hang Su, and Xingxing Wei. Diffender: Diffusion-based adversarial defense againstpatch attacks in the physical world. arXiv preprint arXiv:2306.09124, 2023*]* for defending classification models, uses a diffusion model to identify and mitigate the effects of adversarial regions. The methods highlight the effect of noise removal on adversarial patches, which may be further understood through the interpretation of domain adaptation as discussed herein. However, while a diffusion-based defense could further mitigate the threat of adversarial attacks by inpainting the affected areas, an extensive number of diffusion steps are required to inpaint an image, which introduces a high processing time overhead. Furthermore, DIFFender requires integrating guiding prompts into the defense system, which prevents its applicability for the OD task as it often involves complex images with multiple objects of varying sizes and positions.

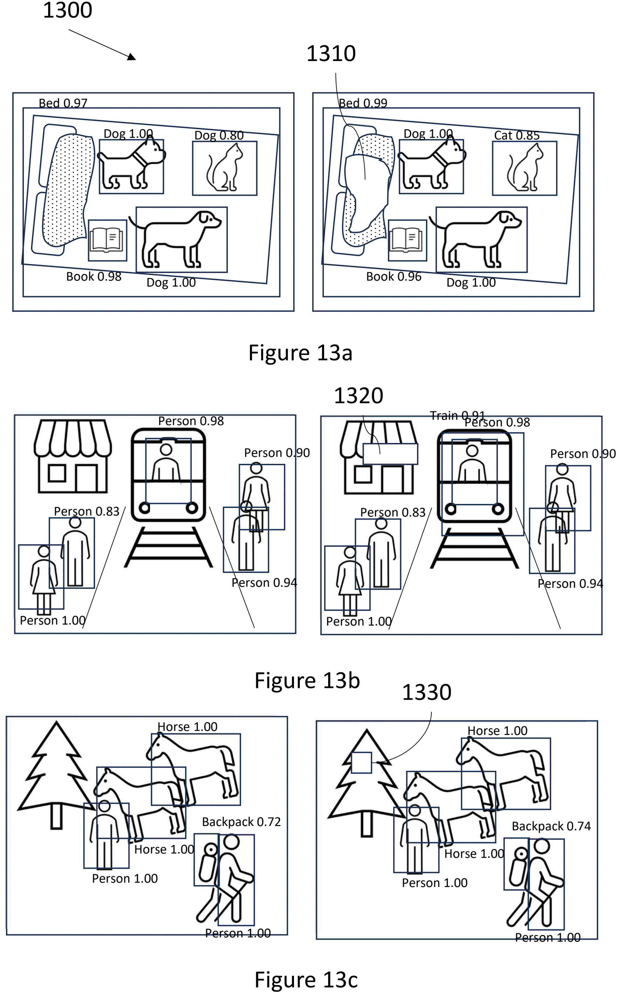

Benign Performance Improvement: While post-training defenses commonly improve adversarial robustness, AntiStyler's benign improvement, as demonstrated in Table 1 and Table 4, is unique. It may be attributed to AntiStyler's random style removal, which, despite being associated with adversarial attacks, can also be related to noisy textures like those found in vegetation (tree leaves, grass, etc.) and vibrant fabrics. While AntiStyler's mask is absent in the vast majority (more than 99%) of benign images, it can be found on noisy textures in images that AntiStyler does mask, improving the model's predictions on the objects in the image. These improvements include improved bounding boxes and detection of previously unnoticed objects. For instance, the inventors found that applying the model to benign images with noisy textures such as vegetation and masking the noisy texture improved detection of additional objects in the images (see Figures 13a-c).

Defense Limitation: A possible limitation of AntiStyler is seen in partial occlusion scenarios, where the patch covers a significant region in an image (e.g., a person's face). In those scenarios, the resulting mask will also cover this region, which may reduce the model's performance. An in-painting technique may be implemented when a partial occlusion case is detected; however, as previously explained on DIFFender, this may increase the inference time, which may not be as useful for real-time OD applications.

The AntiStyler method disclosed here presents a rapid defense against adversarial patch attacks. AntiStyler features model-, patch- and attack-agnostic capabilities and does not require training, making it a fully agnostic zero-shot defense against adversarial patch attacks. The results of the evaluation show that the AntiStyler method is effective against both digital and physical patch attacks, outperforming SOTA defenses. Additionally, AntiStyler is among the fastest defenses against adversarial patch attacks, with an image processing rate of 10-12 FPS. The methods may be extended by providing alternatives for the filter and enhancement phases with image-to-image models to restore the masked adversarial regions (in-painting) and extending AntiStyler to defend against adversarial perturbations as well.

Thus, as shown herein, AntiStyler demonstrated state-of-the-art (SOTA) adversarial robustness, enhancing the performance of Faster R-CNN and DETR by approximately 15 and 10 mAP%, respectively, while maintaining the undefended models' benign performance and enabling practical processing time for real-time OD applications. In addition, as shown, AntiStyler successfully withstood two different adaptive attacks that attempt to mitigate the attacks' random style, further validating its robustness against adaptive and zero-day patch attacks.

**One-step ablation study** In addition to the ablation study described above, a one-step ablation study was also conducted to evaluate the contribution of each layer in the enhancement phase. Table 5 presents the results of the one-step ablated variants of AntiStyler (**D**ilation, **E**rosion, **S**moothing, **T**hresholding). As can be seen, while AntiStyler's whole pipeline achieved the best performance, the erosion step was the most impactful, boosting both benign and adversarial performance by 14 mAP%. This can be explained since this step removes small unconnected masked regions, reducing unnecessary masking and focusing on relevant areas. In additional, the results of RM-AntiStyler (AntiStyler's variant which does not include the enhancement phase) presented in this table and described herein show that it is possible to apply AntiStyler without needing to improve the raw mask, which further highlights the effectiveness of detecting and masking the attacks only based on identifying pixels associated with the random style.

**Ablation Study on DETR** Table 6 presents the performance of each AntiStyler variant on the DETR experiments from the digital evaluation section. These results show that while implementing all four phases (style removal, filter, enhancement, and mask) with Faster R-CNN in both benign and adversarial columns, for DETR, simply removing the random style (UM variant) was sufficient to improve benign performance and withstand various attacks (PGD, DPatch, and Google). One possible explanation for this observation is the difference in image processing between the DETR and Faster R-CNN OD models. While the Faster R-CNN model utilizes CNN-based image processing in both its backbone and the region proposal network (RPN), the DETR model replaces the RPN with a transformer encoder-decoder architecture. This difference in the image processing pipeline may explain this surprising observation, as CNN modules utilize spatial information using their convolutional filters, which may be less affected by the small pixel value differences caused by the random style removal. On the other hand, the DETR's encoder-decoder architecture utilizes attention-based embeddings and object

**Table 5. mAP% for one-step ablated variants of AntiStyler on the COCO dataset and the Faster R-CNN OD model.**

| Defense Method | Google | | M-PGD | | DPatch | |
|---|---|---|---|---|---|---|
| | Benign | Adv | Benign | Adv | Benign | Adv |
| Undefended | 51.6 | 16.6 | 45.8 | 22.3 | 49.4 | 23.0 |
| RM-AntiStyler | 48.1 | 30.4 | 41.5 | 35.3 | 45.5 | 35.2 |
| RM-AntiStyler + D | 32.8 | 18.5 | 26.6 | 23.5 | 32.9 | 23.2 |
| RM-AntiStyler + D + E | 49.1 | 26.0 | 40.8 | 35.8 | 46.1 | 36.2 |
| RM-AntiStyler + D + E + S | 47.7 | 32.4 | 43.6 | 34.8 | 46.9 | 36.2 |
| RM-AntiStyler + D + E + S + T | 50.7 | 30.1 | 45.7 | 37.1 | 48.8 | 37.8 |
| **AntiStyler** | **51.6** | **32.5** | **45.8** | **38.0** | **48.9** | **38.3** |

**Table 6. mAP% for ablated variants of AntiStyler on the COCO dataset and the DETR OD model.**

| Defense Method | Google | | M-PGD | | DPatch | |
|---|---|---|---|---|---|---|
| | Benign | Adv | Benign | Adv | Benign | Adv |
| Undefended | 52.8 | 30.8 | 53.6 | 29.1 | 56.8 | 35.6 |
| UP-AntiStyler | 46.0 | 43.0 | 44.9 | 43.1 | 52.3 | 48.9 |
| UM-AntiStyler | **54.9** | **43.7** | **57.3** | **45.5** | **58.8** | **49.9** |
| RM-AntiStyler | 53.4 | 40.9 | 52.4 | 40.6 | 58.6 | 48.1 |
| **AntiStyler** | 52.9 | 41.8 | 54.6 | 39.4 | 57.7 | 44.4 |

queries, which may be more affected by those small changes (e.g., small changes may cause different feature embeddings in the embedding space).

**Evaluation results on YOLOv11 and RT-DETRv2** To further demonstrate AntiStyler's model-agnostic capabilities, we evaluate AntiStyler on Ultralytics YOLOv11m OD model and the official RT-DETRv2 OD model. ART currently does not support these models, thus only AntiStyler was evaluated with the implementation of the M-PGD attack attacking the COCO dataset. The undefended YOLO and RT-DETR models achieved 48.6 and 56.5 mAP% on benign images and 27.7 and 33 mAP% on adversarial ones, respectively. Using AntiStyler, the defended models achieved 48.3 and 56.5 mAP% on benign images and 35.7 and 43.8 mAP% on adversarial ones, respectively. These results show that AntiStyler maintains the high benign performance while improving the adversarial robustness by 10 mAP(%), thus validating Antisyler's model-agnostic capabilities.

**Evaluation Results on the APRICOT Dataset:** Unlike the Superstore dataset, the APRICOT dataset contains only adversarial images and is focused on the attack's effect (introducing false object detections) rather than the object in the scene (i.e., most images present the patch on a wall or bench). Due to this difference, in the APRICOT dataset, the Attack Success Rate (ASR) was used as the evaluation metric, setting the IoU threshold to 0.10 and the confidence threshold to 0.30.

APRICOT's target model is the Faster R-CNN OD model, and the dev set was used as the evaluation set. Similarly to the Superstore dataset, the APRICOT dataset utilizes creation patch attacks (introducing false object detections); therefore, ObjectSeeker was excluded from the compared defences for a fair comparison (as it is designed to withstand only disappearance attacks).

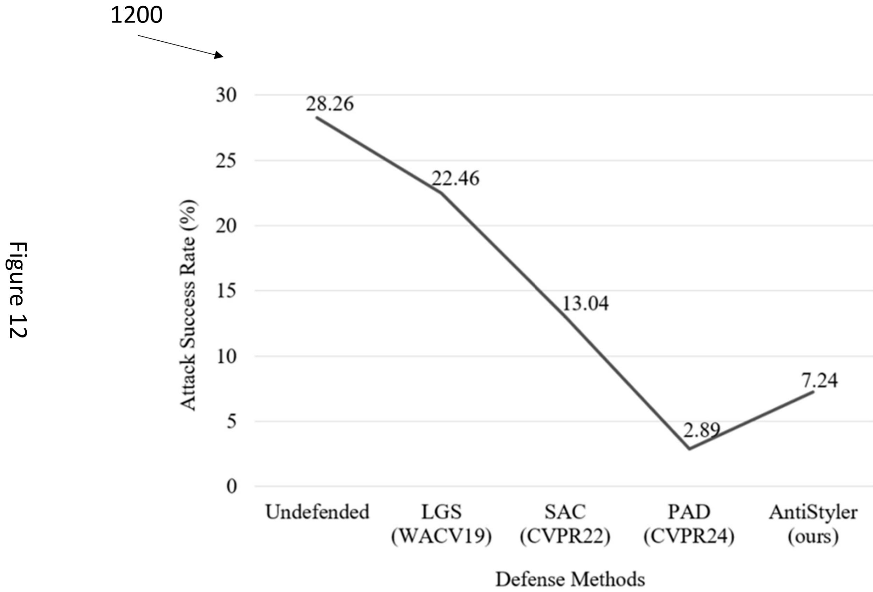

**Figure 12** shows a graph 1200 comparing the results of AntiStyler with other defences. In particular, Figure 12 shows ASR(%) for each defence on the APRICOT dataset and the Faster R-CNN OD model. The AntiStyler achieves the second-best performance compared to PAD. As mentioned herein, while PAD achieves high adversarial robustness, its high image processing time (approximately 55 seconds) neglects its adversarial robustness, rendering it an efficient yet impractical defence for real-time OD applications. Additionally, the lack of benign images and the ASR metric may lead to an unbalanced comparison, as the lack of benign performance leads to a partial evaluation of defending against an attack without defending the predictions of benign objects. Without comparing benign performance, an optimal ASR result (of 0%) can be obtained by simply covering the entire image with a black mask (with no regard to benign/ adversarial objects in the scene). Therefore, while PAD achieves high adversarial robustness on the APRICOT dataset, its poor performance on benign images in the COCO and Superstore datasets balances its performance and presents a less optimal defence (especially when considering its high processing time).

As described herein, the AntiStyler model maintained the high benign performance of the undefended Faster R-CNN OD model. However, the inventors' surprising found that when AntiStyler was applied to DETR, it not only maintained but also slightly improved its benign performance. This observation was evaluated by comparing images in which the prediction of solely DETR was improved after applying AntiStyler.

**Figures 13a-13c** shows examples 1300 of improved benign performance of the AntiStyler model. While in most images, AntiStyler does not affect the benign image, in those that it does, it primarily masks noisy textures such as vegetation and vibrant fabrics. Due to these "mistaken" masks, AntiStyler slightly improved DETR's benign performance with effects that range from correcting misclassified objects, detecting previously unnoticed objects, and improving the existing object bounding boxes. In these examples, the "mistaken" mask is often far from the affected (and improved) object detections, which may explain why it affected DETR's predictions and did not affect Faster R-CNN's (due to the inherent image processing difference between the DETR and Faster R-CNN OD models discussed herein. In addition, DETR benefitted the most from the UM-AntiStyler variant, which implies that simply removing the random style from these noisy textures may be sufficient and even better than covering their region in the image, as evident by the mean increase of approximately two mAP% on benign images in Table 6.

**Figure 13a** shows an image of a dogs and cat lying on a bed. In the unmasked image (left image) the cat is incorrectly identified as a dog (label "Dog 0.80"). The benign image is input into the AntiStyler model, and, in this instance, a mask 1310 has been applied to the 'noisy' bed sheets (right image). As a result, the cat is now correctly identified as a cat ("Cat 0.85") by an object detection model. Thus, the methods described herein may improve the accuracy of object detection models.

**Figure 13b** shows a scene including a train, people and a shop (left image). The image is input into the AntiStyler model and a mask 1320 is applied to a 'noisy' banner of the shop (right image). As a result, the train is now also identified in the image on the right. The AntiStyler may therefore enhance the detection capabilities of the OD model and allow for new detections to occur.

**Figure 13c** shows a scene of a hiker, and a person with horses (left image). The AntiStyler has applied a mask 1330 to a small region of a tree. As a result, the certainty/probability of a backpack of the hiker has increased from 0.72 left image to 0.74 right image. The AntiStyler model may therefore enhance bounding box predictions.

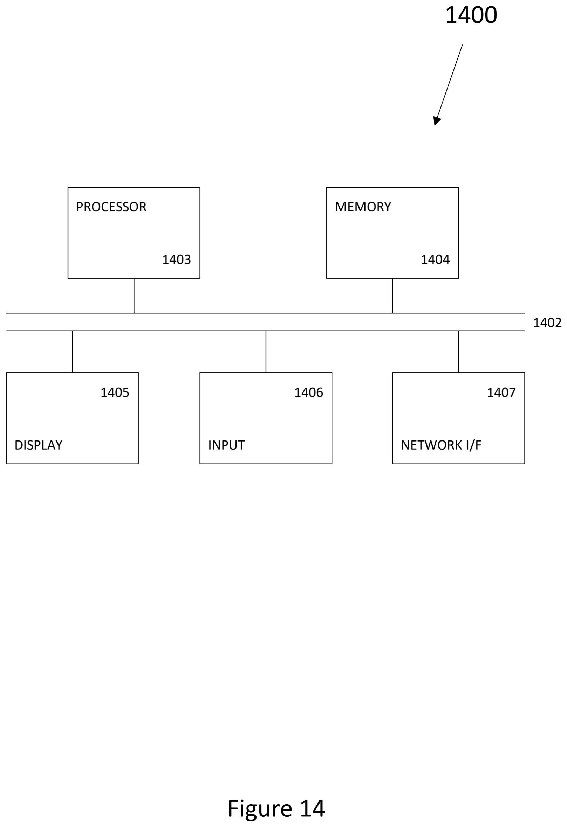

**Figure 14** is a block diagram of an information processing apparatus 1400 or a computing device 1400 or server 1400, such as a (data storage) server, which may be used to implement some or all of the operations of a method(s) described herein, and perform some or all of the tasks of apparatus of an embodiment. The computing device 1400 may be used to implement any of the method steps described above, e.g. any of steps S10-50, for example.

The computing device 1400 comprises a processor 1403 and memory 1404. Optionally, the computing device also includes a network interface 1407 for communication with other such computing devices, for example with other computing devices of invention embodiments. Optionally, the computing device also includes one or more input mechanisms such as keyboard and mouse 1406, and a display unit such as one or more monitors 1405. These elements may facilitate user interaction. The components are connectable to one another via a bus 1402.

The memory 1404 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S50. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 1403 is configured to control the computing device and execute processing operations, for example executing computer program code stored in the memory 1404 to implement any of the method steps described herein. The memory 1404 stores data being read and written by the processor 1403 and may store at least one a CNN model, weights of the CNN, a style removal model, and/or any architecture and/or model and/or block described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 1403 may be considered to comprise any of the blocks, or units, or modules, described herein. Any operations described as being implemented by a block may be implemented as a method by a computer and e.g. by the processor 1403.

The display unit 1405 may display a representation of data stored and/or generated by the computing device, such as a classification of an object/content in an image. For instance, the computing device may be a device which accepts an input image and determines a classification of objects in the input image. The device may request access to a website/web page or server by communicating with another computing device (e.g. a server). The other computing device may store instructions for performing the methods herein and the computing device may instruct the other computing device to provide a classification of the condition. The output may be shown as GUI windows and/or interactive representations enabling a user to interact with the apparatus 1400 by e.g. selection interaction, input text boxes, and/or any other output described above, and may also display a cursor and dialog boxes and screens enabling interaction between a user and the programs and data stored on the computing device. The input mechanisms 1406 may enable a user to input data and instructions to the computing device. For example, the display unit may display a GUI including a User panel, or input space, for the user to interact. For instance, a user may input an input image and query the objects in the image. The user may interact with the GUI and display to generate and view a determined answer. Of course, the method may be performed automatically without interaction with a user, for instance, the input image may be automatically input.

The computing device/information processing apparatus may comprise an image capturing device (not shown) such as a digital camera. The image capturing device may capture an image (take a photograph) of a scene in front of it. The captured image may be provided at the input image for the methods described herein.

The network interface (network I/F) 1407 may be connected to a network, such as the Internet, and is connectable to other such computing devices and/or servers via the network. The network I/F 1407 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus/server 1400 such as that illustrated in Figure 14. Such a computing device need not have every component illustrated in Figure 14 and may be composed of a subset of those components. For example, the apparatus 1400 may comprise the processor 1403 and the memory 1404 connected to the processor 1403. Or the apparatus 1400 may comprise the processor 1403, the memory 1404 connected to the processor 1403, and the display 1405. For example, the functions and/or architecture described herein, may be stored in the memory and/or the method described in relation to Figure 2 may be stored in the memory. The processor may be configured to perform the method stored in the memory using, for example, the functions and/or architecture stored in the memory.

The methods described herein may be implemented using a Geforce RTX 3090 GPU, Python 3.7, Torch 1.13, Torchvision 0.14, Numpy 1.21, and ART 1.15.1. For the SR phase, a pretrained VGG-19 network [*Karen Simonyan and Andrew Zisserman. Very deep convolutional networks for large-scale image recognition. ArXiv preprint arXiv:1409.1556, 2014.]* may be used.

A method embodying the present invention may be carried out by a single computing device/server in communication with one or more (data storage) servers via a network. The computing device may be a data storage itself storing at least a portion of the data. The functions and/or architecture and/or method may be stored on the one or more data storage servers and the processor in the computing device may be configured to carry out the method steps.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (applicationspecific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments. That is, the skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## Claims

1. A computer-implemented method for removing an adversarial patch from an image, comprising:
receiving an input image;
generating a noise image comprising random noise;
inputting the input image and the noise image into a neural network;
extracting, using the neural network, a semantic content from the input image and a style from the noise image; and
constructing a de-styled image of the input image from the semantic content with the style from the noise image removed.

2. The method according to claim 1, wherein the de-styled image is input into an object detection model to detect an object in the de-styled image.

3. The method according to any preceding claim, wherein the neural network is a pretrained convolution neural network, CNN, and wherein the semantic content and style are extracted from intermediate layers of the CNN.

4. The method according to claim 3, wherein the semantic content of the input image is extracted from a single layer of the CNN and wherein the style of the noise image is extracted from multiple layers of the CNN.

5. The method according to any preceding claim, wherein the de-styled image is constructed by iteratively updating the input image by a gradient descent optimization using a total loss function, wherein the total loss function comprises a difference between a content loss function of the content and a style loss function of the style.

6. The method according to claim 5, when dependent on claim 4, wherein the content loss function is determined as the mean squared error between a content feature matrix of feature maps of the single layer and a corresponding feature matrix of the updated input image at an iteration, and/or
wherein the style loss function is determined from the mean squared error between Gram matrices for each of the multiple layers and corresponding Gram matrices of the updated input image at an iteration, wherein the Gram matrices for each layer of the multiple layers is determined from the sum of inner products of each feature map in the layer.

7. The method according to any preceding claim, wherein the method further comprises padding the input image with the noise image before inputting the input image into the neural network.

8. The method according to claim 7, wherein the input image comprises an adversarial patch and wherein constructing the de-styled image comprises removing the style of the noise image from at least the padding and from the adversarial patch.

9. The method according to claim 8, wherein the adversarial patch is at least one of a disappearance patch, an illusion patch and a creation patch.

10. The method according to any preceding claim, wherein the method further comprises:
generating an image mask from corresponding pixels of the de-styled image and the input image which exceed a difference threshold; and
applying the image mask to the input image to generate a final image, and preferably wherein the final image is input into an object detection model for detecting an object in the final image.

11. The method according to claim 10, wherein the image mask is generated by applying at least one of a first dilation filter, an erosion filter, a smoothing filter, a thresholding filter, and a second dilation filter.

12. A computer program which, when run on a computer, causes the computer to carry out a method for removing an adversarial patch in an image, comprising:
receiving an input image;
generating a noise image comprising random noise;
inputting the input image and noise image into a neural network;
extracting, using the neural network, a semantic content from the input image and a style from the noise image; and
constructing a de-styled image of the input image from the semantic content with the style from the noise image removed.

13. An information processing apparatus for removing an adversarial patch in an image, comprising a memory and a processor connected to the memory, wherein the processor is configured to:
receive an input image;
generate a noise image comprising random noise;
input the input image and noise image into a neural network;
extract, using the neural network, a semantic content from the input image and a style from the noise image; and
construct a de-styled image of the input image from the semantic content with the style from the noise image removed.

14. The information processing apparatus according to claim 13, further comprising an image capturing device configured to capture the input image.

15. The information processing apparatus according to any of claims 13 to 14, wherein the processor is further configured to input the de-styled image into an object detection model and detect an object in the image.
